# EUROPEAN PATENT APPLICATION

(11) **EP 2 933 494 A1**
(43) Date of publication of application: **21.10.2015**
(21) Application number: 15163834.3
(22) Date of filing: 16.04.2015
(51) Int. Cl.: F04D 17/12, F04D 25/02, F02K 3/06, F02C 3/08, F04D 25/16

(54) **Centrifugal compressors arranged in series with little flow turning in the connections between the compressors**

(30) Priority: 17.04.2014 DE 102014105528
(71) Applicant: Airbus Operations GmbH, 21129 Hamburg (DE)
(72) Inventor: Schneider, Martin, 21129 Hamburg (DE)
(74) Representative: UEXKÜLL & STOLBERG

(57) **Abstract**

What is presented and described is a compressor arrangement with a plurality of centrifugal compressors arranged in sequence. Each centrifugal compressor has a rotor which is able to rotate in a rotor plane and about a drive shaft extending perpendicular to the rotor plane. Air can flow through an inlet of the centrifugal compressor in an inflow direction extending parallel to the drive shaft. Air can flow out of an outlet of the centrifugal compressor in an outflow direction extending in the rotor plane. Air flowing into the inlet of a centrifugal compressor arranged foremost in a flow direction can then flow, in succession in the flow direction, through the remaining centrifugal compressors of the plurality of centrifugal compressors. The air flowing out of the outlet of an upstream centrifugal compressor can flow directly into the inlet of a downstream centrifugal compressor. The drive shafts of two centrifugal compressors - which are in direct succession - are arranged at an angle of between 0 degrees and 90 degrees with respect to one another. The outflow direction of one centrifugal compressor and the inflow direction of a directly downstream centrifugal compressor are arranged at an angle of between 0 degrees and 90 degrees with respect to one another. A turboshaft engine having a compressor arrangement is also presented and described.

## Description

The present invention relates to a compressor arrangement with a plurality of centrifugal compressors arranged in sequence. Each centrifugal compressor has a rotor which is able to rotate in a rotor plane and about a drive shaft extending perpendicular to the rotor plane, which rotor is arranged in a housing and can be driven by the drive shaft. The housing has an inlet and an outlet. The inlet is arranged such that air can flow through the inlet into the housing in an inflow direction extending parallel to the drive shaft. The outlet is arranged such that air can flow out of the outlet in an outflow direction extending parallel to the rotor plane. The plurality of centrifugal compressors is arranged such that air flowing into the inlet of a centrifugal compressor arranged foremost in a flow direction can then flow successively in the flow direction through the remaining centrifugal compressors of the plurality of centrifugal compressors, wherein the air flowing out of the outlet of an upstream centrifugal compressor can flow directly into the inlet of a downstream centrifugal compressor. The present invention also relates to a turboshaft engine having a compressor arrangement.

In combustion engines, such as turboshaft engines in the form of aircraft engines, efficient combustion requires a high degree of compression of the air which is introduced into the combustion chamber for combustion. It is known from the prior art that single-stage centrifugal compressors can achieve a significantly higher degree of compression than single-stage axial compressors. In order to increase the compression, it is possible to connect a plurality of compressors in sequence, one behind the other. However, the maximum compression of axial compressors is also limited in this way.

From US 5,358,378 A, it is known to connect a plurality of centrifugal compressors in series, one after another. The centrifugal compressors each have a rotor which is arranged in a housing and is driven by a drive shaft, wherein the drive shaft simultaneously represents an axis of rotation of the rotor. Consequently, the rotor rotates in or parallel to a rotor plane extending perpendicular to the drive shaft. Air which is to be compressed in one of the centrifugal compressors flows parallel to the drive shaft into the rotor housing, is accelerated radially outwards by the rotor and flows, in an outflow direction which extends or lies in the rotor plane, back out of the rotor housing through an outlet.

In US 5,358,378 A, the centrifugal compressors are arranged sequentially in that they are arranged along a common drive shaft. In other words, the rotors of all the centrifugal compressors are driven by the same drive shaft and rotate about the same axis of rotation. However, this has the result that air from the first centrifugal compressor which exits the housing of the centrifugal compressor laterally in the outflow direction must first be guided back towards the common drive shaft and then parallel to the common drive shaft into the downstream centrifugal compressor. To that end, the air exiting the preceding centrifugal compressor has to be deflected by at least 270 degrees. However, this deflection is disadvantageous since a large part of the energy which has been supplied to the air in the preceding centrifugal compressor is lost again through friction losses and redirection.

It is therefore an object of the present invention to provide a compressor arrangement which avoids the drawbacks known from the prior art. In particular, it is an object of the present invention to provide a compressor arrangement with a plurality of centrifugal compressors, in which the energy losses between two compressor stages are substantially reduced in comparison with the compressor arrangements known from the prior art.

In a first aspect, the object upon which the invention is based is achieved by a compressor arrangement in which the drive shafts of two in the flow direction directly successive centrifugal compressors of the plurality of centrifugal compressors are arranged at an angle of 0 degrees to 90 degrees with respect to one another. In addition, the outflow direction of one centrifugal compressor of the plurality of centrifugal compressors and the inflow direction of a directly downstream centrifugal compressor of the plurality of centrifugal compressors are arranged at an angle of 0 degrees to 90 degrees with respect to one another such that air flowing out of the outlet of the preceding centrifugal compressor in the outflow direction need be redirected by at most 90 degrees in order to flow into the inlet of the downstream centrifugal compressor.

The sequential or consecutive arrangement of compressors, according to the invention, comprises a plurality of centrifugal or radial compressors. Each of these compressors has a rotor which can rotate in a rotor plane. The rotor is driven by a drive shaft running perpendicular to the rotor plane. At the same time, the drive shaft forms the axis of rotation about which the rotor can rotate. The air which is to be compressed in the centrifugal compressor can flow into a housing of the centrifugal compressor through an inlet. In that context, the inlet is formed such that the air in the region of the drive shaft encounters or hits the rotor. An inflow direction, i.e. a direction in which the air flows into the housing or casing of the centrifugal compressor, runs or extends parallel to the drive shaft. The air flowing into the compressor encounters the rotor and is thereby accelerated radially outwards away from the drive shaft, or axis of rotation, and is compressed in the process. The compressed air can leave the housing of the centrifugal compressor through an outlet, wherein the outflow direction, in which the air flows out of the housing, runs essentially parallel to the plane of rotation.

In the present context, an inflow direction and an outflow direction are to be understood as fixed, spatially oriented directions in which a fluid essentially flows at a specific point in a device. In contrast, a flow direction is not a fixed, spatially oriented direction. It is primarily provided in order to define a sequence in which a fluid passes or flows through elements or sections of a device.

The plurality of centrifugal compressors of the compressor arrangement are arranged and connected to one another such that the air to be compressed flows in sequence in a flow direction through all the centrifugal compressors of the plurality of centrifugal compressors and is further compressed by each of the centrifugal compressors. In that context, one of the centrifugal compressors constitutes the centrifugal compressor arranged foremost in the flow direction, into whose inlet the air to be compressed is fed first. The air is compressed by this centrifugal compressor and leaves through the outlet of the foremost centrifugal compressor in the flow direction, and is fed into the downstream centrifugal compressor.

Directly consecutive centrifugal compressors are arranged such that the air flowing out of the outlet of the preceding centrifugal compressor need be redirected by at most 90 degrees in order to flow into the inlet of the downstream centrifugal compressor. To that end, the drive shafts of the centrifugal compressors are inclined at an angle of at most 90 degrees with respect to one another, and are arranged at a distance from one another. In that context, an angle between two shafts is defined irrespective of the direction of rotation. In other words, two parallel shafts are arranged both at an angle of 0 degrees and at an angle of 180 degrees with respect to one another. Contrary to this, however, in the present case, when considering directions, such as the inflow direction and the outflow direction, the vectorial component is taken into account. Two parallel directions are thus arranged at an angle of 0 degrees with respect to one another, while two antiparallel directions are arranged at an angle of 180 degrees with respect to one another. Accordingly, the rotor planes are inclined by an angle of at most 90 degrees with respect to one another. The angle at which the outflow direction of the upstream centrifugal compressor is arranged with respect to the downstream centrifugal compressor then essentially corresponds to the angle at which the drive shafts of the successive centrifugal compressors are inclined with respect to one another, minus 90 degrees. If, for example, the drive shafts are inclined at an angle of 30 degrees with respect to one another, then the angle between the preceding outflow direction and the downstream inflow direction is 60 degrees. The arrangement described in the example of the centrifugal compressor arranged foremost in the flow direction and of the immediately or directly downstream centrifugal compressor is accordingly repeated for further directly successive centrifugal compressors of the compressor arrangement.

The arrangement of the centrifugal compressors, according to the invention, makes it possible to make use of the high compression ratio of the centrifugal compressors without it being necessary for the air, which is to be compressed, to be considerably redirected between two successive centrifugal compressors. In contrast to arrangements of centrifugal compressors known from the prior art, the air flowing out of an upstream centrifugal compressor is not redirected by approximately 270 degrees before it encounters the rotor of the downstream centrifugal compressor, but rather by at most approximately 90 degrees. In this manner, the energy losses between two compressor stages are substantially reduced.

In a preferred embodiment, the drive shafts of the plurality of centrifugal compressors are arranged at an angle of between 0 degrees and 10 degrees with respect to one another and the outflow direction of a centrifugal compressor of the plurality of centrifugal compressors and the inflow direction of a centrifugal compressor directly downstream thereof are arranged at an angle of between 80 degrees and 90 degrees with respect to one another. In the preferred embodiment, the drive shafts of the plurality of centrifugal compressors are inclined at an angle of at most 10 degrees with respect to one another. It is thus possible to achieve a compact construction of the arrangement. In addition, the minor inclination of the drive shafts with respect to one another makes it easier for all of the drive shafts to be driven via a single drive train.

In a preferred embodiment, the drive shafts of the plurality of centrifugal compressors are arranged parallel to one another and the outflow direction of a centrifugal compressor of the plurality of centrifugal compressors and the inflow direction of a centrifugal compressor directly downstream thereof are arranged essentially at an angle of 90 degrees with respect to one another. In other words, the drive shafts of the directly successive centrifugal compressors are arranged at an angle of approximately 0 degrees with respect to one another, while the outflow direction and the inflow direction of centrifugal compressors in direct succession are arranged essentially at right angles to one another. The preferred embodiment permits a particularly compact configuration of the compressor arrangement in the direction of the drive shafts of the centrifugal compressors, since the overall height of the entire compressor arrangement is determined primarily by the overall height of the individual centrifugal compressors in the direction of the drive shafts, and not by their dimensions in the rotor plane.

In a preferred embodiment, the centrifugal compressors are arranged in such a way that the inflow directions of centrifugal compressors which are in direct succession in the flow direction are arranged at an angle of between 90 degrees and 180 degrees with respect to one another, preferably at an angle of approximately 180 degrees. In the preferred embodiment, in which the inflow directions of centrifugal compressors in direct succession are arranged at an angle of approximately 180 degrees with respect to one another, it can also be said that the inlets of centrifugal compressors in direct succession in the flow direction always point in opposite directions away from the rotor planes of the respective centrifugal compressors. In other words, the inflow directions of centrifugal compressors arranged in direct succession in the flow direction face or point in opposite directions. The preferred embodiment facilitates a particularly compact construction of the compressor arrangement. The centrifugal compressors can be arranged such that they at least partly overlap and such that the overall height of the compressor arrangement in the direction of the drive shafts does not correspond to the multiple overall height of the individual centrifugal compressor, but is reduced perpendicular to the rotor plane by the overlap between two successive centrifugal compressors. At the same time, the centrifugal compressors in the preferred embodiment can be arranged such that the rotors of successive centrifugal compressors at least partially overlap perpendicular to the drive shafts. The dimensions of the centrifugal compressor arrangement can thus be substantially reduced in this direction too.

Preferably, a common drive train is provided for the purpose of driving the drive shafts of the plurality of centrifugal compressors. A common drive train advantageously makes it possible to drive the plurality of centrifugal compressors via a single drive unit, for example a turbine of a turboshaft engine.

In a preferred embodiment, the common drive train is formed by a central shaft extending at an angle of between 45 degrees and 90 degrees, preferably at an angle of approximately 90 degrees, to the drive shafts of the plurality of centrifugal compressors, wherein a bevel gear is in each case provided for transferring load between each of the drive shafts and the central shaft. In the preferred embodiment, the central shaft runs in other words essentially parallel to the rotor planes of the plurality of centrifugal compressors. The bevel gears are for example each formed by two bevel gearwheels, wherein the size of the individual bevel gearwheels can be adapted such that different centrifugal compressors of the plurality of centrifugal compressors can be driven at different rotational speeds.

In an alternative preferred embodiment, there is provided a drive line which is arranged such that an air flow flowing through the drive line forms the common drive train, wherein an impeller for transferring load between the drive shafts and the air flow flowing through the drive line is arranged on each of the drive shafts which impeller can be driven by the air flow, wherein the rotation of the impeller can be transferred to the respective drive shaft. The air flow flowing in the drive line can for example be taken directly from the combustion chamber of a turboshaft engine. The use of impellers which are rigidly connected to the drive shafts of the respective centrifugal compressors and which rotate with the drive shafts facilitates a particularly low-wear manner of driving the centrifugal compressors since no gears are required. It is then possible to use the dimensions and configuration of the impellers to adapt the rotational speed of the various rotors. It is thus possible to provide centrifugal compressors having particularly high rotational speeds, as are used in small engines, since the maximum rotational speed of the centrifugal compressor is not limited by the loading capacity of a gearing. The centrifugal compressor arrangement according to the invention can for example be used in aircraft engines, motor vehicles or helicopters.

In a second aspect, the object is achieved by a turboshaft engine having a compressor arrangement according to one of the preceding embodiments, a combustion chamber and a turbine which are arranged in a housing such as an engine nacelle. The compressor arrangement, the combustion chamber and the turbine are arranged such that air flowing through an inlet into the housing of the turboshaft engine can at least in part flow into the inlet of the centrifugal compressor of the compressor arrangement arranged foremost in the flow direction, can flow into the combustion chamber after flowing through the plurality of centrifugal compressors and can flow arranged foremost in the flow direction into the turbine and drive the turbine.

The turboshaft engine according to the invention can for example be an aircraft engine in the form of a gas turbine engine with an internal fan, a so-called turbofan engine, or an external propeller, a so-called turboprop engine, wherein the fan or propeller is arranged upstream of the inlet of the centrifugal compressor arranged foremost in the flow direction. It is equally conceivable to use such a turboshaft engine in a motor vehicle or a helicopter.

In a preferred embodiment, a common drive train is provided for driving the drive shafts of the plurality of centrifugal compressors. In a first alternatively preferred development, the common drive train is formed by a central shaft extending at an angle of between 45 degrees and 90 degrees, preferably at an angle of approximately 90 degrees, to the drive shafts of the plurality of centrifugal compressors, wherein bevel gears are provided for transferring load between the drive shafts and the central shaft. In a second alternative and also preferred embodiment, there is provided a drive line which is arranged such that an air flow flowing through the drive line forms the common drive train, wherein, for transferring load between the drive shafts and the air flow flowing through the drive line, an impeller is arranged on each of the drive shafts which impeller can be driven by the air flow, wherein the rotation of the impeller can be transferred to the respective drive shaft.

The advantages of the various embodiments of the turboshaft engine according to the invention correspond to the advantages of the respective embodiments of the compressor arrangement which are used in the turboshaft engine.

In a preferred embodiment of a turboshaft engine in which the a common drive train in the form of a central shaft is provided, the turbine is an axial turbine which is set up to drive the central shaft. In an alternatively preferred embodiment, the turbine is an impeller which is set up to drive the central shaft.

In an also preferred embodiment, a heat exchanger is provided which heat exchanger is arranged such that air flowing out of the compressor arrangement first flows through the heat exchanger before it flows into the combustion chamber. Moreover, there is provided a recovery line which is arranged such that at least part of the air leaving the combustion chamber can be guided through the recovery line to the heat exchanger in order to heat the air flowing from the compressor arrangement into the heat exchanger. The heat exchanger advantageously heats the air flowing out of the compressor before it reaches the combustion chamber and thus improves the efficiency of the combustion chamber.

The present invention will be explained below with reference to a drawing which merely represents preferred exemplary embodiments, and in which:
- Fig. 1: shows a schematic representation of an exemplary embodiment of a compressor arrangement according to the invention,
- Fig. 2: shows a schematic representation of a further exemplary embodiment of a compressor arrangement according to the invention,
- Fig. 3: shows a schematic representation of an exemplary embodiment of a turboshaft engine according to the invention, in the form of an aircraft engine,
- Fig. 4: shows a schematic representation of a further exemplary embodiment of a turboshaft engine according to the invention in form of an aircraft engine,
- Fig. 5: is a partial perspective section view of a drive of a central shaft of the exemplary embodiment represented in Fig. 4 by means of an impeller,
- Fig. 6: shows a schematic representation of a further exemplary embodiment of a turboshaft engine according to the invention in form of an aircraft engine,
- Fig. 7: shows a section view of a drive of a central shaft of a compressor arrangement by an impeller from the exemplary embodiment represented in Fig. 6 and
- Fig. 8: shows a section view through a heat exchanger from the exemplary embodiment represented in Figs 6 and 7, along the line A-A.

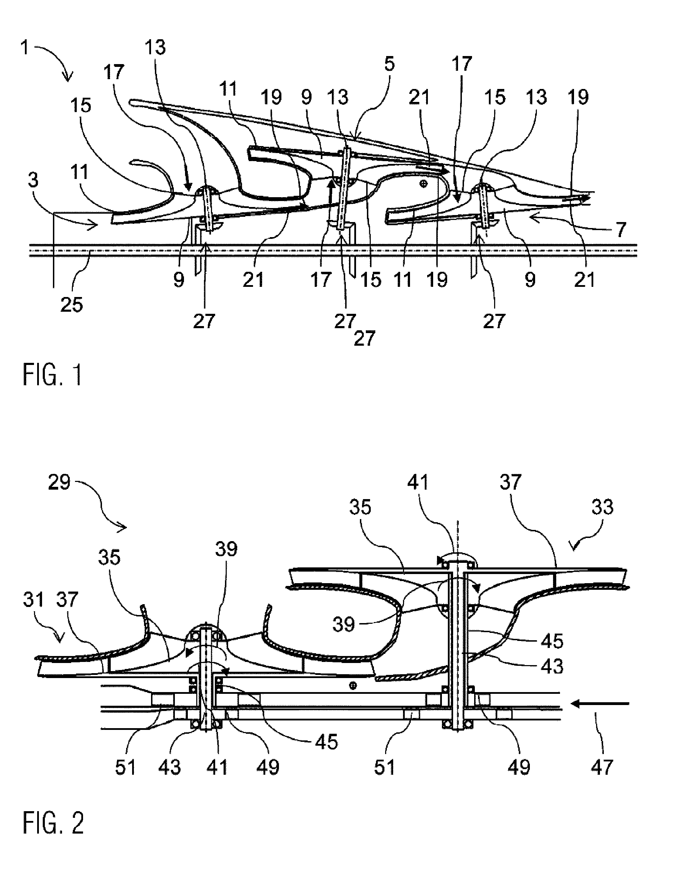

An exemplary embodiment of a compressor arrangement 1 according to the invention with three centrifugal compressors 3, 5, 7 of identical construction will be described below with reference to Fig. 1. Identically named elements of the centrifugal compressors 3, 5, 7 will be labelled with the same reference signs.

Each of the centrifugal compressors 3, 5, 7 has a rotor 9 which is arranged in a housing 11 such that it can rotate parallel to a rotor plane. The rotor 9 can rotate about an axis of rotation which coincides with a drive shaft 13 by means of which the rotor 9 can be driven. The drive shaft 13 and thus the axis of rotation of the rotor 9 extend perpendicular to the rotor plane. Air which is to be compressed with one of the centrifugal compressors 3, 5, 7 can flow through an inlet 15 into the housing 11 of the centrifugal compressor 3, 5, 7. When flowing in through the inlet 15, the air flows essentially in a flow direction 17 parallel to the drive shaft 13. The air made to flow in encounters the rotor 9 driven in rotation, and is accelerated outwards by the latter, i.e. radially away from the drive shaft 13, and is thus compressed. The compressed air can flow out again from the centrifugal compressor 3, 5, 7 through an outlet 19 of the housing 11. The air then flows essentially in an outflow direction 21 which lies in the rotor plane and thus runs perpendicular to the inflow direction 17.

The inflow direction 17 and the outflow direction 21 are to be understood as spatially oriented directions in which a fluid flows at a specific point in a device. The inflow direction 17 and the outflow direction 21 are each oriented essentially perpendicular to the cross section of the inlet 15 and, respectively, of the outlet 19 through which the flow flows at the relevant point. In contrast, a flow direction is not a fixed, spatially oriented direction. It is primarily provided in order to define a sequence in which a fluid passes or flows through elements or sections of a device.

The compressor arrangement 1 according to the invention provides that the centrifugal compressors 3, 5, 7 are arranged and connected to one another in the flow direction such that once air has been made to flow into the centrifugal compressor 3 arranged foremost in the flow direction, i.e. the centrifugal compressor 3 of the compressor arrangement 1 into which the air to be compressed flows first, this air flows in succession through all of the centrifugal compressors 3, 5, 7 and is compressed in each of the centrifugal compressors 3, 5, 7. In that context, two successive centrifugal compressors 3, 5, 7, that is to say for example the centrifugal compressor 3 arranged foremost in the flow direction and the immediately downstream centrifugal compressor 5, are arranged such that the drive shafts 13 of the centrifugal compressors run at an angle of approximately 10 degrees with respect to one another and the air flowing in the outflow direction 21 out of the upstream centrifugal compressor 3, 5, need be redirected by less than 90 degrees before it can flow in the inflow direction 17 into the downstream centrifugal compressor 5, 7. In other words, an angle of less than 90 degrees exists between the outflow direction 21 of an upstream centrifugal compressor 3, 5 and the inflow direction 17 of a downstream centrifugal compressor 5, 7. In the exemplary embodiment represented in Fig. 1, an angle of approximately 80 degrees is formed by the outflow direction 21 and the inflow direction 17 of two centrifugal compressors 3, 5, 7 in direct succession in the flow direction.

The arrangement according to the invention makes it possible to reduce the friction losses between two compressor stages, i.e. two immediately successive centrifugal compressors 3, 5, 7, with respect to the prior art, since the air to be compressed need be redirected by at most 90 degrees. Moreover, the arrangement according to the invention of the centrifugal compressors 3, 5, 7 parallel to the rotor planes permits a particularly compact construction since the centrifugal compressors 3, 5, 7 can be arranged overlapping parallel to the rotor planes such that the overall dimensions of two successive centrifugal compressors 3, 5, 7 parallel to the rotor plane are substantially smaller than if these are arranged one beside the other.

Furthermore, the centrifugal compressors 3, 5, 7 are arranged such that the inflow directions 17 of centrifugal compressors 3, 5, 7 in direct succession in the flow direction enclose an angle of 170 degrees. In other words, the inlets 15 of centrifugal compressors 3, 5, 7 in direct succession in the flow direction 23 are oriented in opposite directions away from the respective rotor plane, wherein the rotor planes of centrifugal compressors 3, 5, 7 in direct succession in the flow direction are inclined at an angle of approximately 10 degrees with respect to one another. It is thus possible to achieve a construction of the compressor arrangement 1 which is particularly compact in the direction of the drive shafts 13, since the dimensions of the compressor arrangement 1 in the direction of the drive shafts 13 can be reduced perpendicular to the rotor planes of the centrifugal compressors 3, 5, 7 by overlapping the centrifugal compressors 3, 5, 7.

The drive shafts 13 of the centrifugal compressors 3, 5, 7 of the exemplary embodiment represented in Fig. 1 are driven by means of a common drive train 25 in the form of a central shaft 25. The individual drive shafts 13 are each connected to the central shaft 25 via a bevel gear 27, wherein a transmission ratio of the bevel gears 27 has been chosen such that the rotors 9 of the centrifugal compressors 3, 5, 7 are operated with the appropriate rotational speed according to the position of the respective centrifugal compressor 3, 5, 7 along the flow direction 23. The drive shafts 13 and the central shaft 25 enclose an angle of 85 degrees.

Fig. 2 shows an alternative embodiment of a compressor arrangement 29 according to the invention with two centrifugal compressors 31, 33. The same reference signs as in Fig. 1 are used to identify elements of the compressor arrangement 29 in Fig. 2, in so far as the elements are labelled accordingly. The compressor arrangement 29 differs from the compressor arrangement 1 in Fig. 1 both in the arrangement of the individual centrifugal compressors 31, 33 with respect to one another and in the construction of the two centrifugal compressors 31, 33 and the manner in which they are driven.

Each of the centrifugal compressors 31, 33 has two rotors 35, 37 which rotate parallel to the same plane of rotation and about the same axis of rotation. In that context, one of the rotors 37, the outer rotor 37, is arranged radially outwards, proceeding from the axis of rotation, about the other rotor 35, the inner rotor 35. In other words, the outer rotor 37 surrounds the inner rotor 35. The rotors 35, 37 rotate in opposite directions of rotation 39, 41. The rotors 35, 37 are driven by two drive shafts 43, 45 which extend along an axis of rotation of the rotors 35, 37. The drive shaft 43 of the inner rotor 35 runs within the drive shaft 45 of the outer rotor 37.

The drive shafts 43, 45 are driven by a drive line 47 through which an air flow flows as a common drive train. This air flow drives impellers 49, 51 which are each connected in a rotationally fixed manner with one of the drive shafts 43, 45. The rotational speed of the rotors 35, 37 can be adapted by means of the size and the configuration of the impellers 49, 51. That the drive shafts 43, 45 are driven by impellers 49, 51 which are acted upon by air is particularly advantageous since it requires no engagement between mechanical parts, which can lead to wear.

In the exemplary embodiment shown in Fig. 2, the centrifugal compressors 31, 33 are arranged such that the rotor planes of the centrifugal compressors 31, 33 extend parallel to one another. In other words, the outflow direction 21 of the upstream centrifugal compressor 31 and the inflow direction 17 of the downstream centrifugal compressor 33 enclose an angle of 90 degrees.

It is to be noted that the configurations of the centrifugal compressors 3, 5, 7, 31, 33 and of the drive trains 25, 47 can be exchanged between the exemplary embodiments shown in Figs 1 and 2. In other words, it is possible both for the centrifugal compressors 3, 5, 7 shown in Fig. 1 to be driven by an air flow as in the exemplary embodiment shown in Fig. 2, and for the two-stage centrifugal compressors 31, 33 to be driven by a central shaft 25. The exemplary embodiments of a centrifugal compressor arrangement 1, 29, shown in Figs 1 and 2, can for example be used in a turboshaft engine in the form of an aircraft engine. However, it is equally conceivable to use the centrifugal compressor arrangements 1, 29 for example in a motor vehicle or a helicopter.

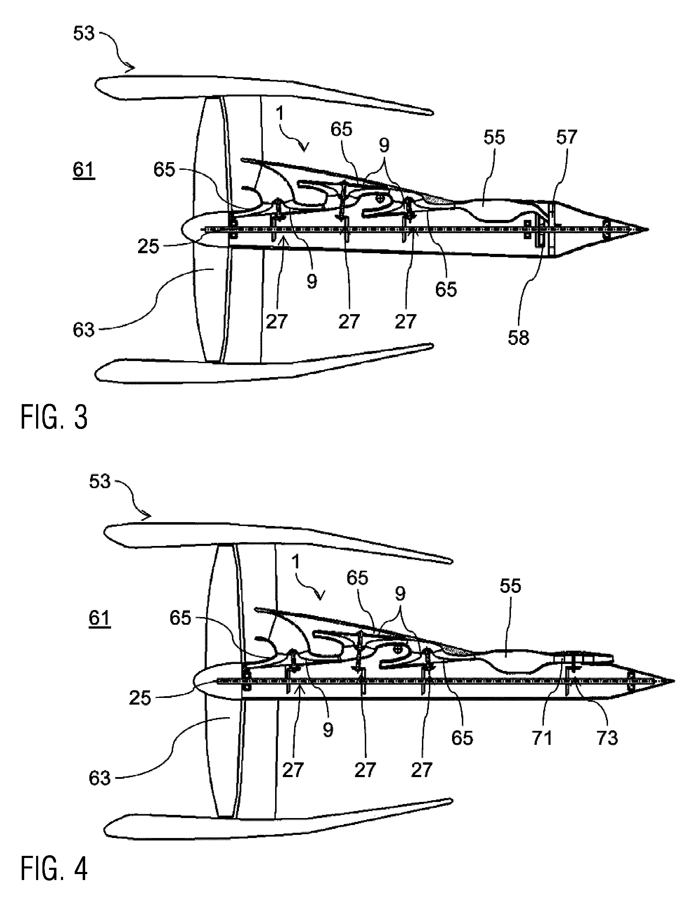

Fig. 3 shows an exemplary embodiment of a turboshaft engine 53 according to the invention, in the form of an aircraft engine 53, which in this case is a so-called turbofan engine. The aircraft engine 53 comprises a compressor arrangement 1, a combustion chamber 55 and a turbine 57 in the form of an axial turbine 57, which are arranged in a housing 59 in the form of an engine nacelle 59. The construction of the compressor arrangement 1 and the manner in which it is driven correspond to the construction which has already been described in detail with reference to Fig. 1. Another detailed description of the construction of the compressor arrangement 1 will hence be omitted here. However, it is equally conceivable to use, in an aircraft engine, the compressor arrangement 29 described with reference to Fig. 2. It is also possible to use, in aircraft engines, combinations of the compressor arrangements, for example with centrifugal compressors which each have multiple rotors that are driven via a common shaft.

An internal fan 63, through which air can flow into the engine nacelle 59, is arranged within an intake 61 of the engine nacelle 59. Part of the air can be fed directly into the compressor arrangement 1 which has three centrifugal compressors 65 arranged in sequence. After the air has flowed through the three centrifugal compressors 65 and has been compressed in the process, it flows into the combustion chamber 55. Fuel is injected into the combustion chamber 55 where it ignites, with the air flowing into the combustion chamber 55 being burned and thus greatly heated. The air greatly heated in the combustion chamber 55 is then fed into the axial turbine 57 and sets the latter in rotation. For its part, the axial turbine 57 drives, via a central shaft 25, the fan 63 and the rotors 9 of the centrifugal compressors 65. In that context, in the exemplary embodiment shown in Fig. 3, there is arranged, between the axial turbine 57 and the actual central shaft 25, a gearing 58 in the form of an epicyclic gearing 58 in order to produce a sufficiently high torque on the central shaft 25. However, it is also conceivable to drive the central shaft 25 directly from the axial turbine 57, without an interposed gearing 58.

The exemplary embodiment of an aircraft engine 53 according to the invention is advantageous for the same reasons as the exemplary embodiment, used therein, of a compressor arrangement 1 according to the invention.

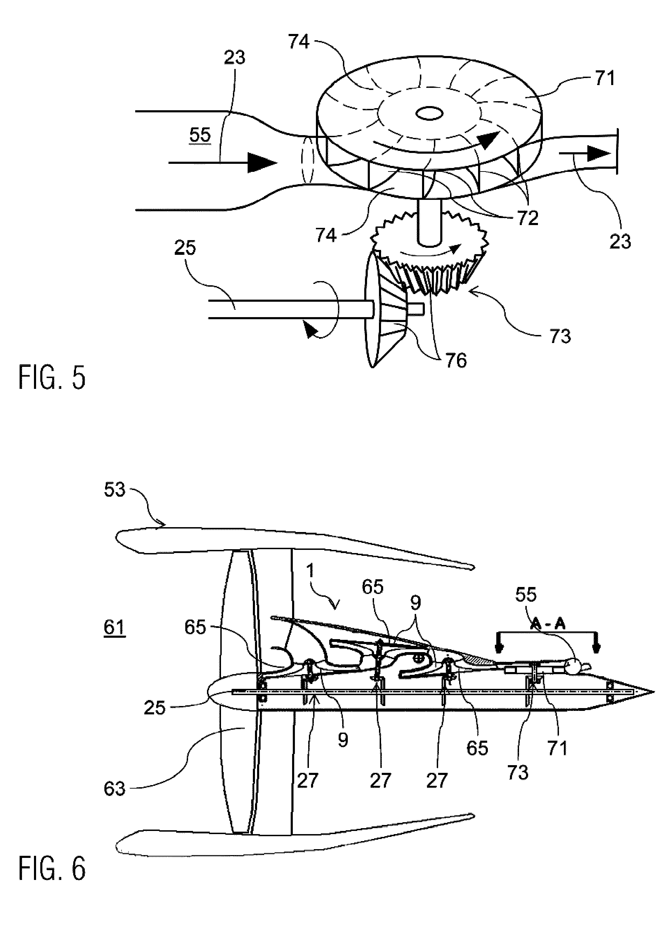

A second exemplary embodiment of a turboshaft engine 53 in the form of an aircraft engine 53 is shown in Fig. 4. The construction of the turboshaft engine 53 in Fig. 4 substantially matches the construction of the turboshaft engine 53 from Fig. 3. The difference between the two embodiments primarily resides in the drive for the central shaft 25. Instead of an axial turbine 57 as in Fig. 3, there is provided, as turbine 71, an impeller 71 which is arranged downstream of the combustion chamber 55. The impeller 71, which is represented in more detail in Fig. 5, is set in rotation by the hot air flowing out from the combustion chamber 55 and drives the central shaft 25 via a bevel gear 73 which comprises two bevel gearwheels 76. Since there is provided, between the impeller 71 and the central shaft 25, a bevel gear 73 by means of which it is advantageously possible to change the rotational speeds and thus the torque between the central shaft 25 and the impeller 71, there is no need for an additional gearing as in the exemplary embodiment represented in Fig. 3. Driving the central shaft 25 via an impeller 71 also permits particularly high combustion temperatures in the combustion chamber 55 since the impeller 71 can advantageously be of one-piece, i.e. monolithic, ceramic construction. The monolithic impeller 71 shown in Fig. 5, whose construction essentially matches the construction of a water wheel, is formed of a plurality of turbine blades 72 which are arranged between two discs 74 that are connected to the turbine blades 72 and are also made of ceramic. By virtue of the turbine blades 72 being arranged between the discs 74, which are preferably formed in one piece with the turbine blades 72, the gap losses when the turbine 71 is being driven are minimized.

Figs 6, 7 and 8 show a third exemplary embodiment of an aircraft engine 53 whose construction - unless specifically stated otherwise - matches the construction of the exemplary embodiments shown in Figs 3 and 4. The two embodiments differ in the arrangement of the combustion chamber 55 and the means for driving the central shaft 25. Contrary to the exemplary embodiment shown in Fig. 3, the central shaft 25 is also driven by a turbine 71 in the form of an impeller 71 which is arranged directly downstream of the combustion chamber 55. In other words, the air heated in the combustion chamber 55 flows around the impeller 71 and sets the latter in rotation, as shown best in Fig. 6. In the exemplary embodiment shown in Fig. 6, the impeller 71 is also connected to the central shaft 25 via a bevel gear 73. However, it is also conceivable that the air flow flowing out of the combustion chamber 55 is guided such that it drives an impeller 71 which is arranged directly on the central shaft 25.

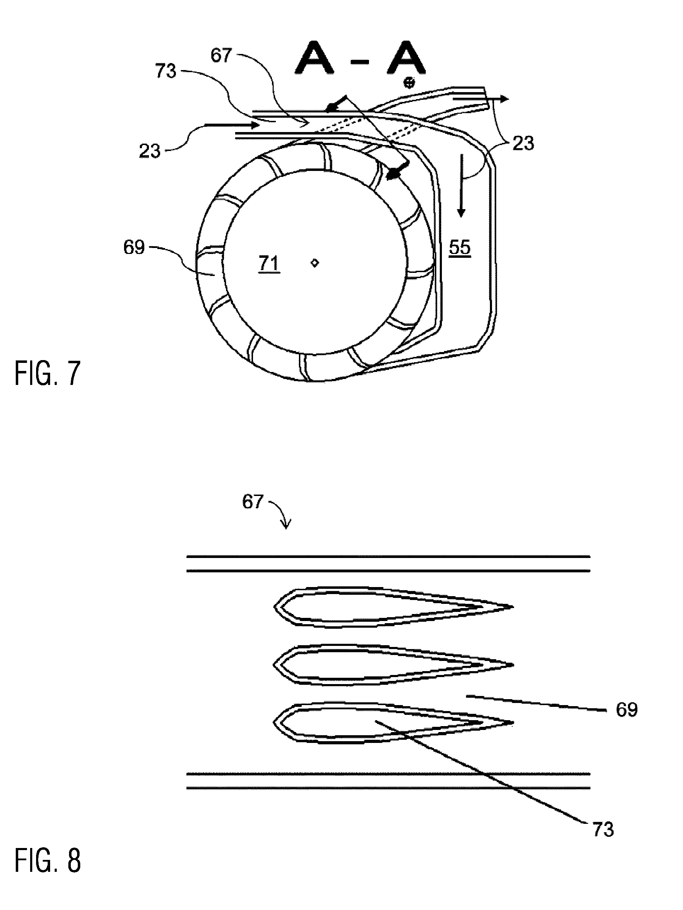

Furthermore, a heat exchanger 67, shown schematically in greater detail in Figs 7 and 8, is arranged in the flow direction 23 between the compressor arrangement 1 and the combustion chamber 55. The air flowing out of the combustion chamber is fed, via a recovery line 69, back into the heat exchanger 67, where it advantageously heats the air flowing through a connecting line 73 from the compressor arrangement 1 into the combustion chamber, and thus raises the efficiency of the combustion in the combustion chamber 55. In a particularly advantageous manner, the recovery line 69 then simultaneously forms the path which drives the impeller 71. In that context, in the case of the exemplary embodiment shown in Figs 6, 7 and 8 the arrangement of combustion chamber 55, impeller 71 and heat exchanger 67 has advantageously been chosen such that, in order to drive the impeller 71 and in spite of flowing through the heat exchanger, the air flowing out from the compressor arrangement 1 need be redirected by a total of only 360 degrees. The friction losses are thus advantageously minimized.

## Claims

1. Compressor arrangement (1, 29) with a plurality of centrifugal compressors (3, 5, 7, 31, 33, 65) arranged in sequence, wherein each centrifugal compressor (3, 5, 7, 31, 33, 65) has a rotor (9, 35, 37) which is able to rotate in a rotor plane and about a drive shaft (13, 43, 45) extending perpendicular to the rotor plane, which rotor is arranged in a housing (11) and can be driven by the drive shaft (13, 43, 45),
wherein the housing (11) has an inlet (15) and an outlet (19), wherein the inlet (15) is arranged such that air can flow through the inlet (15) into the housing (11) in an inflow direction (17) extending parallel to the drive shaft (13, 43, 45), and the outlet (19) is arranged such that air can flow out of the outlet (19) in an outflow direction (21) extending in the rotor plane,
wherein the plurality of centrifugal compressors (3, 5, 7, 31, 33, 65) is arranged such that air flowing into the inlet (15) of a centrifugal compressor (3, 31, 65) arranged foremost in a flow direction can then flow, in succession in the flow direction, through the remaining centrifugal compressors (5, 7, 33, 65) of the plurality of centrifugal compressors (3, 5, 7, 31, 33, 65), wherein the air flowing out of the outlet (19) of an upstream centrifugal compressor (3, 5, 31, 65) can flow directly into the inlet (15) of a downstream centrifugal compressor (5, 7, 33, 65),
**characterized in that**
the drive shafts (13, 43, 45) of two in the flow direction directly successive centrifugal compressors (3, 5, 7, 31, 33, 65) of the plurality of centrifugal compressors (3, 5, 7, 31, 33, 65) are arranged at an angle of between 0 degrees and 90 degrees with respect to one another, and
**in that** the outflow direction (21) of one centrifugal compressor (3, 5, 7, 31, 33, 65) of the plurality of centrifugal compressors (3, 5, 7, 31, 33, 65) and the inflow direction (17) of a directly downstream centrifugal compressor (5, 7, 33, 65) of the plurality of centrifugal compressors (3, 5, 7, 31, 33, 65) are arranged at an angle of between 0 degrees and 90 degrees with respect to one another such that air flowing out of the outlet (19) in the outflow direction (21) need be redirected by at most 90 degrees in order to be able to flow in the inflow direction (17) into the inlet (15) of the directly downstream centrifugal compressor (5, 7, 33, 65).

2. Compressor arrangement (1, 29) according to Claim 1, **characterized in that** the drive shafts (13, 43, 45) of the plurality of centrifugal compressors (3, 5, 7, 31, 33, 65) are arranged at an angle of between 0 degrees and 10 degrees with respect to one another and
**in that** the outflow direction (21) of a centrifugal compressor (3, 5, 7, 31, 33, 65) of the plurality of centrifugal compressors (3, 5, 7, 31, 33, 65) and the inflow direction (17) of a directly downstream centrifugal compressor (5, 7, 33, 65) of the plurality of centrifugal compressors (3, 5, 7, 31, 33, 65) are arranged at an angle of between 80 degrees and 90 degrees with respect to one another.

3. Compressor arrangement (1, 29) according to Claim 2, **characterized in that** the drive shafts (13, 43, 45) of the plurality of centrifugal compressors (3, 5, 7, 31, 33, 65) are arranged parallel to one another and
**in that** the outflow direction (21) of a centrifugal compressor (3, 5, 7, 31, 33, 65) of the plurality of centrifugal compressors (3, 5, 7, 31, 33, 65) and the inflow direction (17) of a directly downstream centrifugal compressor (5, 7, 33, 65) of the plurality of centrifugal compressors (3, 5, 7, 31, 33, 65) are arranged approximately at an angle of 90 degrees with respect to one another.

4. Compressor arrangement (1, 29) according to one of the preceding claims, **characterized in that** the centrifugal compressors are arranged such that the inflow directions (17) of centrifugal compressors (3, 5, 7, 31, 33, 65) which are in direct succession in the flow direction are arranged at an angle of between 90 degrees and 180 degrees with respect to one another, preferably at an angle of approximately 180 degrees.

5. Compressor arrangement (1, 29) according to one of the preceding claims, **characterized in that** a common drive train (25) is provided for driving the drive shafts (13, 43, 45) of the plurality of centrifugal compressors (3, 5, 7, 31, 33, 65).

6. Compressor arrangement (1) according to Claim 5, **characterized in that** the common drive train (25) is formed by a central shaft (25) extending at an angle of between 45 degrees and 90 degrees, preferably at an angle of approximately 90 degrees, to the drive shafts (13) of the plurality of centrifugal compressors (3, 5, 7, 65), wherein a bevel gear (27) is in each case provided for transferring load between each of the drive shafts (13) and the central shaft (25).

7. Compressor arrangement (29) according to Claim 5, **characterized in that** a drive line (47) is provided which drive line (47) is arranged such that an air flow flowing through the drive line (47) forms the common drive train, wherein, for transferring load between the drive shafts (43, 45) and the air flow flowing through the drive line (47), on each of the drive shafts (43, 45) an impeller (49, 51) is arranged which impeller (49, 51) can be driven by the air flow, wherein the rotation of the impeller (49, 51) can be transferred to the respective drive shaft (43, 45).

8. Turboshaft engine (53) having a compressor arrangement (1) according to Claim 1, 2, 3 or 4, a combustion chamber (55) and a turbine (57, 71) which are arranged in a housing (59),
wherein the compressor arrangement (1), the combustion chamber (55) and the turbine (57, 71) are arranged and connected such that air flowing through an inlet (61) into the housing (59) can at least in part flow into the inlet (15) of the centrifugal compressor (65) arranged foremost in the flow direction, can flow into the combustion chamber (55) after flowing through the plurality of centrifugal compressors (65) and can flow from the combustion chamber into the turbine and drive the turbine (57, 71).

9. Turboshaft engine (53) according to Claim 8, **characterized in that** a common drive train (25) is provided for driving the drive shafts (13) of the plurality of centrifugal compressors (65).

10. Turboshaft engine (53) according to Claim 9, **characterized in that** the common drive train (25) is formed by a central shaft (25) extending at an angle of between 45 degrees and 90 degrees, preferably at an angle of approximately 90 degrees, to the drive shafts (13) of the plurality of centrifugal compressors (65), wherein bevel gears (27) are provided for transferring load between the drive shafts (13) and the central shaft (25).

11. Turboshaft engine (53) according to Claim 10, **characterized in that** the turbine (57) is an axial turbine (57) which is adapted to drive the central shaft (25).

12. Turboshaft engine according to Claim 10, **characterized in that** the turbine (71) is an impeller (71) which is adapted to drive the central shaft (25).

13. Turboshaft engine according to Claim 9, **characterized in that** a drive line is provided which drive line (47) is arranged such that an air flow flowing through the drive line (47) forms the common drive train, wherein, for transferring load between the drive shafts (43, 45) and the air flow flowing through the drive line (47), an impeller is arranged on each of the drive shafts (43, 45) which impeller (49, 51) can be driven by the air flow, wherein the rotation of the impeller (49, 51) can be transferred to the respective drive shaft (43, 45).

14. Turboshaft engine (53) according to one of Claims 8 to 13, **characterized in that** a heat exchanger is provided which heat exchanger (67) is arranged such that air flowing out of the compressor arrangement (1) can first flow through the heat exchanger (67) before it can flow into the combustion chamber (55), wherein a recovery line (69) is provided which recovery line (69) is arranged such that at least part of the air leaving the combustion chamber (55) can be guided through the recovery line (69) to the heat exchanger (67) in order to heat the air flowing from the compressor arrangement (1) into the heat exchanger (67).
